# EUROPEAN PATENT SPECIFICATION

(11) **EP 2 719 890 B1**
(45) Date of publication and mention of the grant of the patent: **17.05.2017**
(21) Application number: 12188567.7
(22) Date of filing: 15.10.2012
(51) Int. Cl.: F03B 13/18

(54) **A wave energy harnessing device**
Wellenenergienutzungsvorrichtung
Dispositif de captation d'énergie des vagues

(43) Date of publication of application: 16.04.2014
(73) Proprietor: Blue Power Energy Limited, Malahide, Co. Dublin (IE)
(72) Inventor: Haughey, Conor, Dublin, County Dublin (IE); O'Brien, Colin, County Meath (IE)
(74) Representative: O'Neill, Brian

(56) References cited:
- WO-A1-2012/010518
- GB-A- 1 515 744
- US-A- 281 370
- US-A- 607 072
- US-A- 2 783 022
- US-B1- 7 841 177

## Description

### Field of the invention

The present invention relates to a wave energy power take off unit, and a device for harnessing wave energy incorporating one or more of the power take off units, and in particular a wave energy harnessing device having a buoyant portion for location on the surface of a body of water, the device being capable of harnessing energy from displacement of the buoyant portion in response to the passage of waves, and which does so with substantial efficiency while providing a steady electrical output.

### Background of the invention

The global shortage of fossil fuels as a source of energy, in addition to the environmental damage which the use of such fossil fuels has incurred on the planet, have led to the inescapable realisation that alternative forms of energy are an essential requirement to the progress and stability of civilisation.

As a result, in recent decades there have been significant moves towards the employment of alternative energy sources, in particular renewable forms of energy, such as the harnessing of solar power, wind power, and to lesser extend tidal and wave energy. These latter two forms of energy have proved more difficult to harness, due in particular to the harsh operating conditions under which devices must operate in order to extract energy from these natural resources.

WO2012010518 discloses an ocean wave power plant provided for by respective interconnected functional units comprising a support structure is disclosed. The support structure is terminated in a lower end with a fastening bracket which can be anchored in a single point to a mass when deployed in the sea. A submergible uplift floating body is providing buoyancy for the ocean wave power plant when deployed in the sea. The uplift floating body is attached to the support structure, an electric power generating subsystem supported by a platform is terminating the support structure in an upper end of the support structure. A transmission member is attached in one end to a floating body and in another end to the power generating subsystem transferring wave motion from the floating body to the power generating subsystem.

US7841177 discloses An apparatus for producing electricity from moving water, such as ocean waves, by converting the wave motion to electricity, the apparatus including a platform, structural tubes, a piston and a float base, where the electricity producing devices may be located on the platform and may be protected from the elements. The wave movement, up and down, between crest and trough causes movement of the piston, and the movement may be used to generate electricity when the piston is coupled with one or more electrical generating devices, such as a generator.

US281370 discloses a wave power device including a float having vertical screws connected with a main drive shaft by gearing, which transmits the vertical movement of said screws to rotary motion of the drive shaft.

It is therefore an object of the present invention to provide a wave energy harnessing device that is both relatively simple mechanically, and therefore robust and capable of withstanding harsh operating conditions, and is efficient, in particular by being adapted to harness energy from both the rise and fall of the device in response to the passage of waves.

### Summary of the invention

According to a first aspect of the present invention there is provided A wave energy power take off unit adapted to convert reciprocating linear motion into rotary motion, the power take off unit comprising a pair of coupled transducers together adapted to convert both directions of the reciprocating linear motion into rotary motion in a single direction, each transducer comprising a linear actuator in the form of a screw thread and a follower, the transducers having one end displaceable relative to an other end to compress and extend the transducers and being adapted to convert a linear input motion into a rotary output motion during the compression and extension.

Preferably, the pair of transducers are disposed in parallel.

Preferably, each transducer comprises a coupling operable to translate the linear input motion into the rotary output motion during linear motion in one direction only.

Preferably, the coupling comprises a unidirectional clutch.

Preferably, the pair of transducers is coupled such that the rotary motion output of one transducer effects simultaneous rotary motion of the other transducer.

Preferably, the pair of transducers comprises a first transducer and a second transducer, the first transducer being arranged to translate linear motion in a first direction into the rotary motion, and the second transducer being arranged to translate linear motion in a second direction, opposite to the first direction, into the rotary motion.

Preferably, each transducer comprises a rotatable output member through which the rotary motion is outputted.

Preferably, the pair of output members are coupled to one another such that rotation of one output member in a first direction effects rotation of the other output member in a second opposite direction.

According to a second aspect of the present invention there is provided a wave energy harnessing device comprising a buoyant member; a base about which the buoyant member is constrained for reciprocating linear motion; and at least one power take off unit according to the first aspect of the invention.

Preferably, the base comprises an anchor member and at least one connecting member extending from the anchor member to the buoyant member.

Preferably, the at least one connecting member is slideably coupled with the buoyant member.

Preferably, the wave energy harnessing device comprises a plurality of the power take off units arranged to extract power from more than one degree of freedom of wave motion.

Preferably, the base comprises a plurality of connecting members coupled between the buoyant member and the anchor member in a manner which permits the buoyant member to move in a plurality of degrees of freedom with respect to the anchor member.

### Brief description of the drawings

The present invention will now be described with reference to the accompanying drawings, in which:
Fig. 1 illustrates a perspective view of a first embodiment of a wave energy harnessing device according to one aspect of the invention, and incorporating a wave energy power take off unit according to an other aspect of the present invention;
Fig. 2 illustrates a sectioned view of the wave energy harnessing device illustrated in Fig. 1;
Fig. 3 illustrates an enlarged view of a portion of the sectioned device illustrated in Fig. 2;
Fig. 4 illustrates a pair of transducers forming part of the device of the present invention, in isolation from the remainder of the device, and in an expanded state;
Fig. 5 illustrates the pair of transducers of Fig. 4 in a compressed state;
Fig. 6 illustrates a sectioned view of the pair of transducers as shown in Fig. 4;
Fig. 7 illustrates an enlarged view of the pair of transducers as shown in Fig. 4, highlighting the connection between the pair of transducers;
Fig. 8 illustrates a perspective view of a second embodiment of a wave energy harnessing device according to one aspect of the invention and comprising a plurality of wave energy power take off units according to an other aspect of the present invention; and
Fig. 9 illustrates a cut away perspective view of the wave energy harnessing device illustrated in Fig. 8.

### Detailed description of the drawings

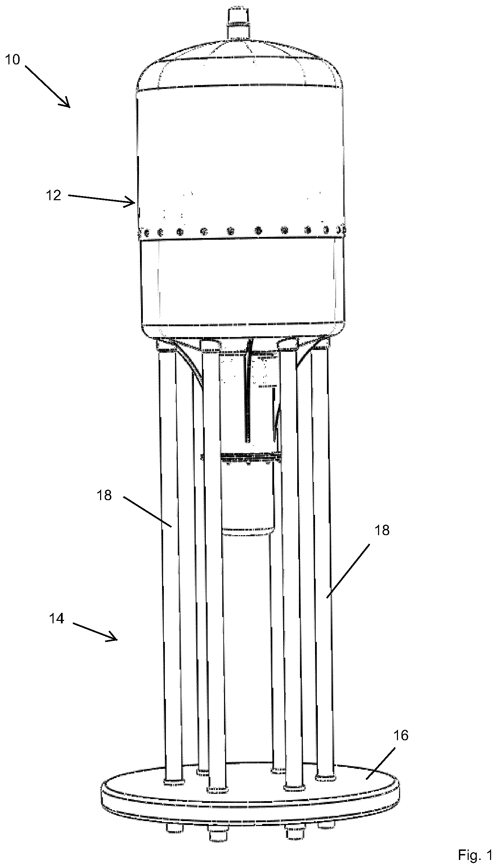

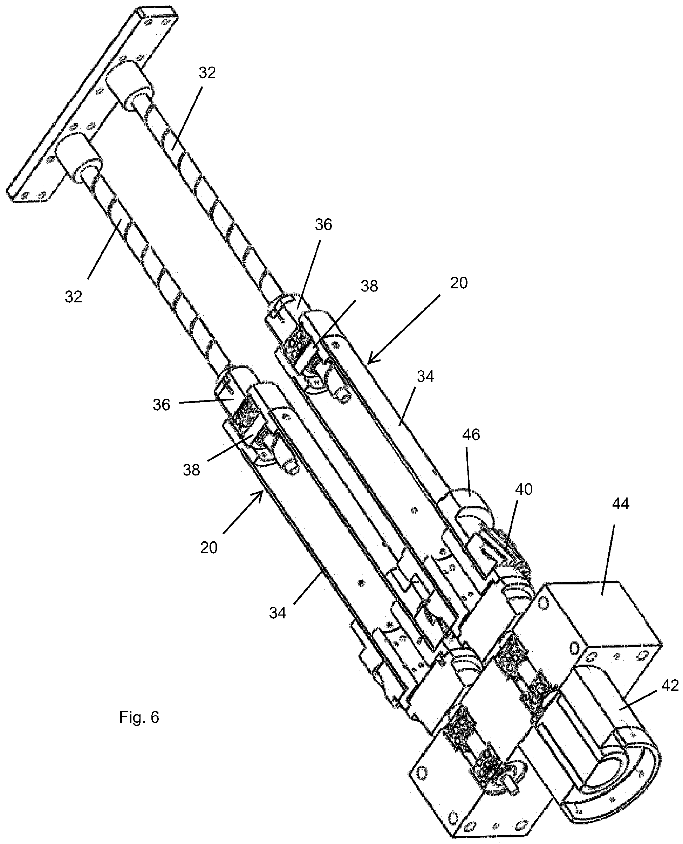

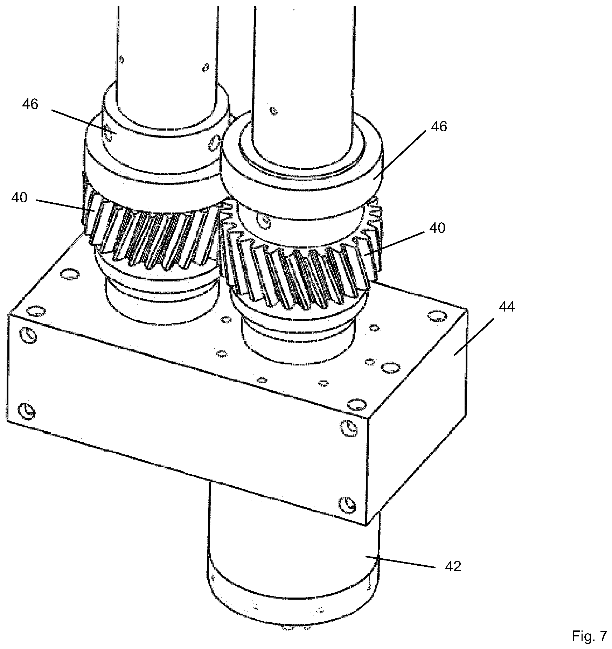

Referring now to Figures 1 to 7 of the accompanying drawings there is illustrated a first embodiment of a wave energy harnessing device, generally indicated as 10, which is adapted to convert the kinetic and/or potential energy of passing waves into some other form of useable energy, most preferably electrical energy. The device 10 may be deployed at any suitable location, and for example is preferably deployed at near shore ocean sites, although any other sites at which waves of sufficient magnitude are regularly generated.

The device 10 comprises a buoyant member 12 which is intended to float, in use, on the surface of such a body of water, and a base 14 relative to which the buoyant member 12 is constrained for reciprocating linear motion, as will be described in greater detail hereinafter. The base 14 is intended to be located, in use, beneath the surface of the body of water, and may be anchored or otherwise tethered to the seabed or other support surface, but is most preferably freely suspended beneath the surface of the body of water as described in greater detail below.

The base 14 comprises, in the embodiment illustrated, a damper plate 16 extending from which are a plurality of connecting members in the form of cylindrical supports 18 which extend in parallel between the damper plate 16 and the buoyant member 12. The upper ends of the supports 18 extend through to the interior of the buoyant member 12 via suitably fluid sealed openings in the bottom of the buoyant member 12.

Thus the buoyant member 12 is constrained for reciprocating linear movement along the supports 18, in response to the rise and fall of waves past the buoyant member 12, while the base 14 remains substantially fixed in position relative to the seabed.

The device 10 further comprises a wave energy power take off unit comprising a pair of coupled transducers 20 located in an interior space defined by the buoyant member 12 and connected between the buoyant member 12 and the supports 18. In this way relative motion between the buoyant member 12 and the supports 18 can be converted by the transducers 20 into electrical energy as hereinafter described. The supports 18 may comprise damping circuitry (not shown) therein in order to damp the reciprocating oscillations of the buoyant member 12 relative to the base 14. These damping circuits may be of any suitable form, for example oil and orifice based dampers, shim stacks, or any other suitable alternative. The dampers (not shown) may also be positioned at any other suitable functional location on the device 10.

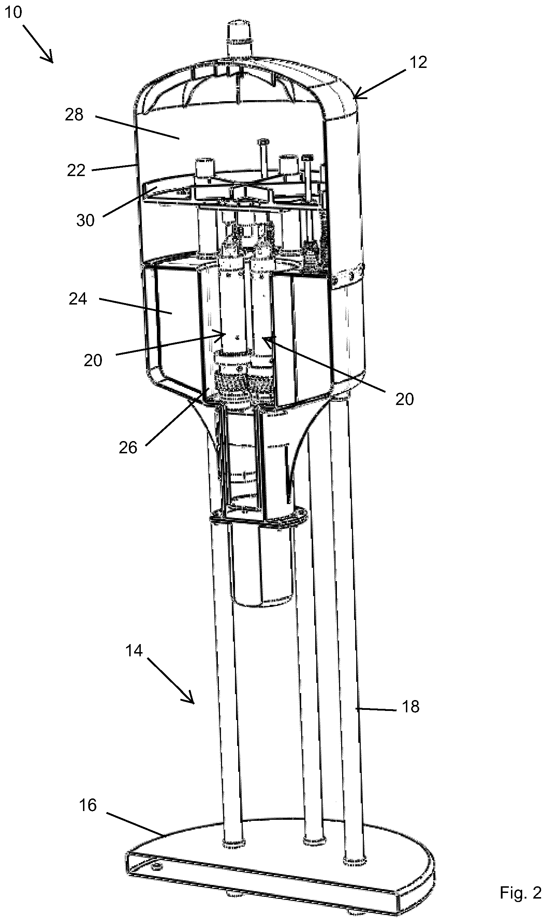

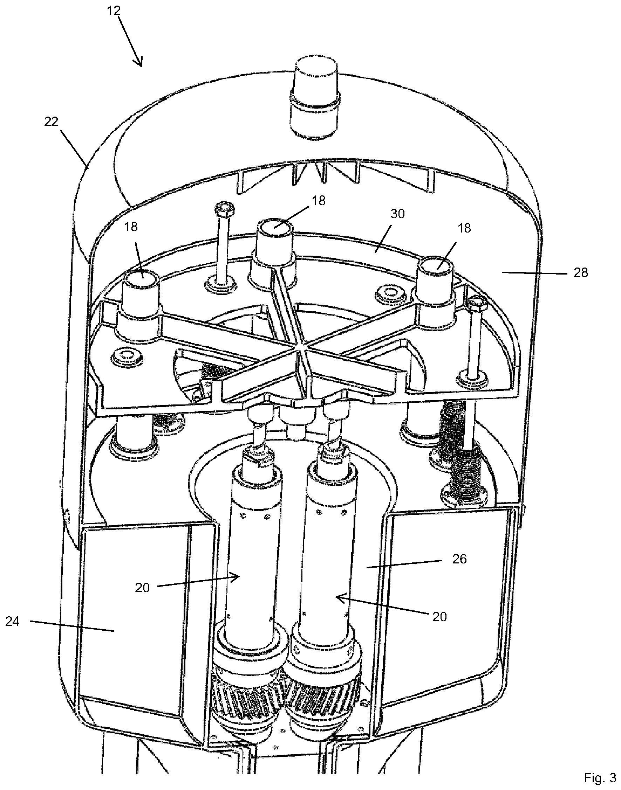

Referring in particular to Figs. 2 and 3, the buoyant member 12 comprises a cylindrical housing 22 which may be formed from any suitable material, for example metal such as aluminium, glass reinforced plastic, or one or polymers or the like, which will be capable of withstanding the relatively harsh operating conditions under which the device 10 will be deployed. In particular the device 10 will be subjected to substantial loading and physical stresses while also being exposed to the corrosive nature of salt water and other natural elements.

The housing 22 defines a lower annular chamber 24 through which the supports 18 first enter the housing 22, the annular chamber 24 defining a well 26 within which the pair of transducers 20 are substantially housed. Located above the annular chamber 24 is a main chamber 28 into which the supports 18 pass and terminate. The free end of each of the supports 18 is fixed to a floating plate 30 which is free to move up and down within the main chamber 28 as relative motion occurs between the buoyant member 12 and the base 14. An underside of a central portion of the floating plate 30 is secured to an upper end of each of the transducers 20, with a lower end of each transducer 20 being fixed to the housing 22 at the base of the well 26.

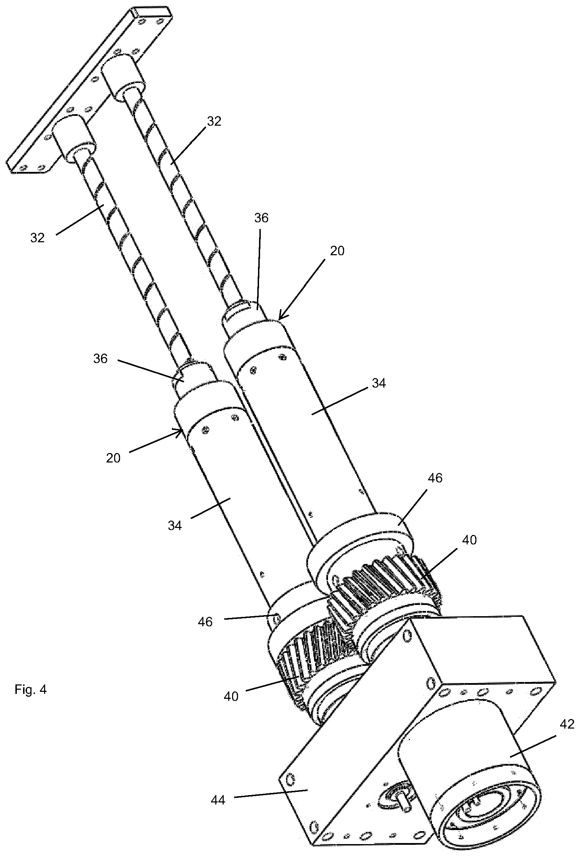

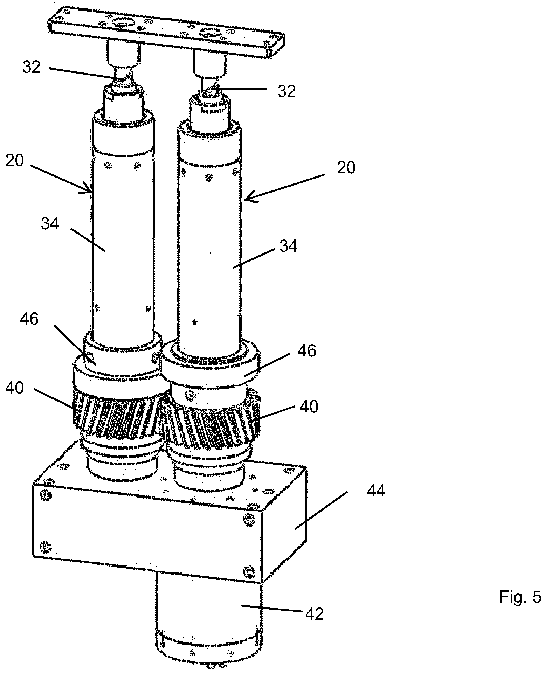

Referring now to Figs. 4 and 5, the wave energy power take off unit, primarily comprising the pair of transducers 20, is shown in isolation from the buoyant member 12 and floating plate 30. Each transducer 20 comprises a linear actuator, and in the embodiment illustrated a ball screw 20, whose input is comprised of a threaded shaft 32 and whose output is an output member in the form of a hollow cylinder located concentrically of the threaded shaft 32. The threaded shaft 32 may be displaced into and out of the hollow cylinder 34 in response to relative displacement of the buoyant member 12 and the base 14, as will be described in greater detail hereinafter. Fig. 4 illustrates the threaded shaft in the extended state, while Fig. 5 illustrates the threaded shaft 32 in a compressed state in which the majority of the threaded shaft 32 is located internally of the hollow cylinder 34. The transducers 20 act to convert the linear displacement of the treaded shaft 32 as an input, into rotational displacement of the hollow cylinder 34 as an output.

In order to convert the linear motion of the threaded shaft 32 into rotational motion of the hollow cylinder 34 each transducer 20 further comprises a follower in the form of a ball screw nut 36 of conventional construction. The ball screw nut 36 is mounted at the upper end of the hollow cylinder 34 and the threaded shaft 32 passes through the centre of the ball screw nut 36. Linear displacement of the threaded shaft 32 through the ball screw nut 36 imparts rotational displacement to the ball screw nut 36. The transducer 20 further comprises a unidirectional clutch in the form of a sprag clutch 38 disposed concentrically about the ball screw nut 36 and between the ball screw nut 36 and the hollow cylinder 34. In this way the sprag clutch 38 is operable to transfer the rotational displacement of the ball screw nut 36 to the hollow cylinder 34 as the output member of the transducer 20. The sprag clutch 38 of each transducer 20 is operable to transmit rotational motion in one direction only, and to idle in the other direction.

As can be seen, in particular from Figs. 4, 5 and 6, the pair of transducers, in this case ball screws 20, are arranged in parallel within the main chamber 28 and are compressed and extended simultaneously through relative motion between the buoyant member 12 and the base 14, as transmitted by the supports 18 and floating plate 30. The sprag clutches 38 are however arranged to operate in reverse to one another such that drive is transferred to one of the hollow cylinders 34 during compression of the ball screws 20, while the other is allowed to freewheel. Conversely drive is transferred to the other hollow cylinder 34 during extension of the ball screws 20, with the other cylinder 34 being allowed to freewheel. In this way power can be extracted during both compression and extension of the ball screws 20, and therefore during both the rise and fall of the buoyant member 12 in response to the passage of waves past the device 10.

While one cylinder 34 is driven and the other freewheels during compression of the ball screws 20, and the converse arrangement during extension, the ball screw transducers 20 are coupled to one another, in this case by means of a pair of meshing spur gears 40 provided about an exterior of a lower portion of each hollow cylinder 34. Thus the pair of hollow cylinders 34 are adapted to directly drive one another. As a result, during compression of the ball screws 20 the one driven cylinder 34 transmits drive via the spur gears 40 to the otherwise freewheeling cylinder 34, and likewise during extension the opposite driven cylinder 34 transfers drive via the spur gears 40 to the otherwise now freewheeling cylinder 34. This ensures that each of the hollow cylinders 34 is continuously driven in a single direction, opposite to one another, and this continuous drive can therefore be transmitted to a generator 42. In the embodiment illustrated the generator 42 is mounted beneath and coaxially with one of the hollow cylinders 34. In this embodiment the pair of transducers 20 are secured at their lower end to a housing block 44 beneath which the generator 42 is secured. Drive from, in this case, the right hand hollow cylinder 34, is transmitted through the housing block 44 to the generator 42. Any other means may however be employed to transmit the rotational displacement of the cylinders 34 to the generator 42.

In order to dampen and/or smoothen the transfer of rotational motion of the cylinders 34 to the generator 42, each transducer 20 is preferably provided with a flywheel 46 mounted, in the embodiment illustrated, externally of the respective hollow cylinder 34. Thus at both the bottom and top of the stroke of the threaded shaft 32, when there will be moment of zero power transfer, the flywheels 46 maintain rotation of the hollow cylinders 34, in order to ensure continuous drive to the generator 42. It will be appreciated that the flywheels 46 may be located at any other suitable position, and may be of any other suitable design.

Driven rotational displacement of each cylinder 34 during only compression or extension of the respective ball screw 20 is achieved by setting one of the sprag clutches 38 to transfer drive in the clockwise direction and freewheel in the anticlockwise direction, while the other sprag clutch 38 is set to transfer drive in the opposite or anticlockwise direction and freewheel in the clockwise direction. Thus with each stroke, namely an upward stroke of the buoyant member 12 relative to the base 14, and a downward stroke, power is transferred separately to each hollow cylinder 34.

Thus for example on the downward stroke the left hand cylinder 34 may be driven in an anticlockwise direction whilst the adjacent or right hand cylinder 34 is in a freewheeling state, but with drive nevertheless being transferred thereto via the spur gears 40. Similarly on the upward stroke the right hand cylinder 34 may be driven in a clockwise direction whilst the left hand cylinder 34 is in a freewheeling state, but with drive again being transferred thereto by the spur gears 40. As a result power is extracted by the device 10 during both the downward and upward strokes of the buoyant member 12. At the transition between the downward and upward strokes the applied force to the transducers 20 momentarily drops to zero, wherein the momentum of the flywheels 46 keep the output cylinders 34 in motion and thus enable a steady power output to the generator 42.

In addition, by providing the pair of transducers 20 in parallel to one another and coupled via the spur gears 40, the device 10 can maintain a relatively low overall height or length while still enabling power to be extracted on the upward and downward strokes. In addition, in the embodiment illustrated, the use of the ball screws 20 provide an extremely efficient mechanical design for extracting power from the passage of waves past the device 10.

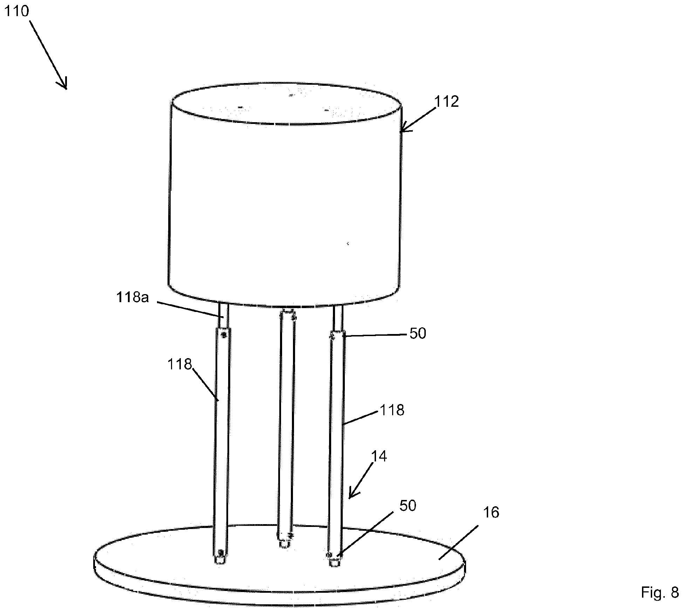

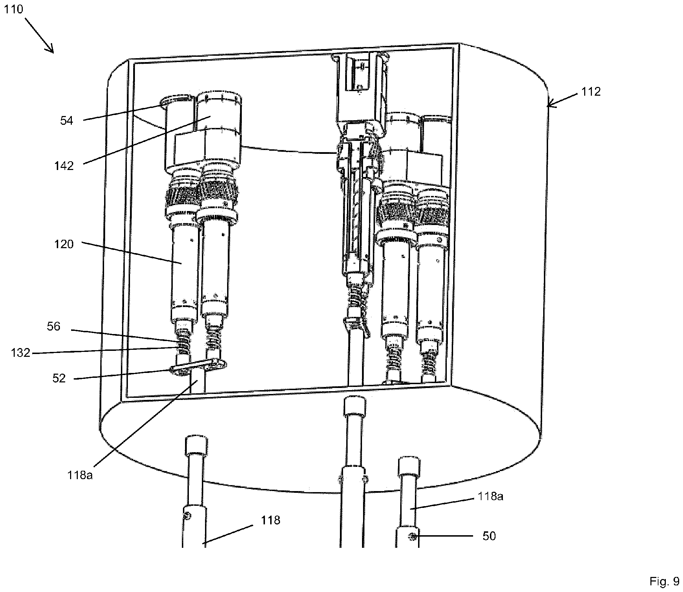

Referring now to Figures 8 and 9 there is illustrated a second embodiment of a wave energy harnessing device, generally indicated as 110, which is adapted to convert the kinetic and/or potential energy of passing waves into another form of useable energy, most preferably electrical energy. In the second embodiment like components have been accorded like reference numerals and unless otherwise stated perform a like function. As with the first embodiment, the device 110 is intended to be deployed at any suitable location, but most preferably near shore ocean sites at which waves of sufficient magnitude are regularly generated.

The device 110 comprises a buoyant member 112 adapted to float on the surface of the body of water, and a base 114 for location beneath the surface of the body of water and relative to which the buoyant member 112 is constrained for motion, as described hereinafter.

However, unlike in the first embodiment, the buoyant member 112 is not purely constrained for reciprocating linear motion along the supports 118, the base 14 being adapted to allow the buoyant member 112 to be displaced through multiple degrees of freedom relative to the base 114, in order to allow the device 110 to extract power from more than one degree of freedom of wave motion, and preferably from the heave, pitch and roll of wave motion. In order to achieve this, a flexible connection must be established between the base 114 and the buoyant member 112. Each of the supports 118 is therefore connected to the base 14 via a flexible coupling, and in the present case by a first universal joint 50, while similarly the upper end of each support 118 is connected to the buoyant member 112 by a flexible joint in the form of a second universal joint 50. In this way each support 118 forms a flexible linkage between the damper plate 116 and the buoyant member 112, allowing the buoyant member 112 to be displaced through multiple degrees of freedom relative to the damper plate 116.

Extending from each of the upper universal joints 50 through to the interior of the buoyant member 112 is a connecting rod 118a which slidably passes through a suitable fluid tight seal into the interior of the buoyant member 112 and is connected to a dedicated power take off unit comprising a pair of transducers 120 which operate in the same fashion as the power take off unit described with reference to the first embodiment. However unlike the first embodiment, there are multiple power take off units disposed within the buoyant member 112. In the embodiment illustrated there are three power take off units corresponding to the three supports 118. It will be appreciated that this number could be increased or decreased as desired, in particular to suit the intended application of the device 110.

Each power take off unit is connected between the upper end of the connecting rod 118a, via a bracket 52 to which one end of each transducer 120 is secured. The opposed end of the transducer 120 is secured to the upper wall of the buoyant member 112 via a mount 54 which also houses a generator 142 which is driven by the transducers 120 as described with reference to the first embodiment, and which is not therefore explained in further detail. The transducers 120 are however additionally provided with a spring 56 disposed about an exposed portion of a threaded shaft 132 of each transducer 120, and acting to urge the transducer 120 into the compressed state.

It will therefore be appreciate that a lower end of each transducer 120 is coupled to the damper plate 16 via the respective support 118 and connecting rod 118a, while the upper end of each transducer 120 is fixed to the buoyant member 112. Thus as the buoyant member 112 is displaced by passing waves relative to the damper plate 116, which will remain relatively stationary, the plurality of transducers 120 will be extended and compressed, thereby converting their reciprocating linear motion into continuous rotary motion which is passed to the respective generator 142 in order to produce electricity. The use of multiple power take off units ensures maximum capture of the energy contained in the passing waves. In particular the energy captured is not only that of the vertically upward and downward motion captured by the device 10 of the first embodiment, but also captures the energy of the waves from other degrees of freedom of motion, in particular the pitch and roll of the waves. This is possible due to the flexible connection between the damper plate 116 and the buoyant member 112 which allow the buoyant member 112, in addition to moving vertically upward and downward to roll ad pitch with the waves. As the buoyant member 112 is displaced by the passing waves in these additional directions, the return springs 56 will act to urge the six transducers 120 back to their compressed state, thus ensuring that the buoyant member 112 constantly returns towards a vertically upright position, on which each subsequent wave will then act.

It will be understood that to capture the energy exerted purely by the heave of the wave, which acts to displace the buoyant member 112 in a vertically upward and downward motion, all three power take off units would be compressed/extended simultaneously and by the same amount. However, in capturing the energy from the pitch or roll, the displacement of the buoyant member 112 will have both a lateral and a vertical component. This will thus result in the supports being displaced into different angular orientations via the universal joints 50, while permitting the buoyant member 112 to remain substantially upright. As a result the various transducers 120 will be extended/compressed by different amounts corresponding to the different distances the connecting rods 118a will be displaced into or out of the buoyant member 112. Thus the device 110 allows the transducers 120 to extract power from vertical and lateral displacement of the buoyant member 112.

As a result of capturing energy from all three degrees of freedom of motion, the device 110 is extremely efficient, and allows the device 110 to be relatively small in size while producing sufficient power.

It is notable that the transducers 20, 120 utilised within the devices 10, 110 are purely mechanical, as opposed to utilising hydraulic circuitry as is often used in prior art wave energy convertors that pressurise hydraulic fluid in order drive a hydraulic motor which in turn drives a generator. Such systems have however proved problematic and inefficient, and are subject to leakage of the hydraulic fluid, thus posing an environmental risk. The power take off unit of the present invention can be used in place of such hydraulic circuitry, and it is therefore envisaged that the power take off unit could be retro fitted to existing wave energy converters or fitted to newly designed converters.

## Claims

1. A wave energy power take off unit adapted to convert reciprocating linear motion into rotary motion, the power take off unit comprising a pair of coupled transducers (20) together adapted to convert both directions of the reciprocating linear motion into rotary motion in a single direction, each transducer (20) comprising a linear actuator in the form of a screw thread (32) and a follower (36), the transducers having one end displaceable relative to an other end to compress and extend the transducers and being adapted to convert a linear input motion into a rotary output motion during the compression and extension.

2. A power take off unit according to claim 1 in which the pair of transducers (20) are disposed in parallel.

3. A power take off unit according to any of preceding claim in which each transducer (20) comprises a coupling (38) operable to translate the linear input motion into the rotary output motion during linear motion in one direction only.

4. A power take off unit according to claim 3 in which the coupling comprises a unidirectional clutch (38).

5. A power take off unit according to any preceding claim in which the pair of transducers (20) is coupled such that the rotary motion output of one transducer effects simultaneous rotary motion of the other transducer.

6. A power take off unit according to any preceding claim in which the pair of transducers (20) comprises a first transducer and a second transducer, the first transducer being arranged to translate linear motion in a first direction into the rotary motion, and the second transducer being arranged to translate linear motion in a second direction, opposite to the first direction, into the rotary motion.

7. A power take off unit according to any preceding claim in which each transducer comprises a rotatable output member (34) through which the rotary motion is outputted.

8. A power take off unit according to claim 7 in which the pair of output members (34) are coupled to one another such that rotation of one output member in a first direction effects rotation of the other output member in a second opposite direction.

9. A wave energy harnessing device (10; 110) comprising a buoyant member (12; 112); a base (14) about which the buoyant member is constrained for reciprocating linear motion; and at least one power take off unit according to any of claims 1 to 8.

10. A wave energy harnessing device (10; 110) according to claim 9 in which the base (14) comprises an anchor member (16) and at least one connecting member (18; 118) extending from the anchor member to the buoyant member.

11. A wave energy harnessing device (10; 110) according to claim 10 in which the at least one connecting member (18; 118) is slideably coupled with the buoyant member (12; 112).

12. A wave energy harnessing device (10; 110) according to any of claims 9 to 11 comprising a plurality of the power take off units arranged to extract power individually or in combination from more than one degree of freedom of wave motion.

13. A wave energy harnessing device (110) according to any of claims 9 to 12 in which the base (14) comprises a plurality of connecting members (118) coupled between the buoyant member and the anchor member in a manner which permits the buoyant member to move in a plurality of degrees of freedom with respect to the anchor member.

## Patentansprüche

1. Wellenenergie-Kraftabnahmeeinheit, die dazu angepasst ist, lineare Hin- und Herbewegung in Drehbewegung umzuwandeln, wobei die Kraftabnahmeeinheit ein Paar gekoppelte Wandler (20) umfasst, die zusammen dazu angepasst sind, beide Richtungen der linearen Hin- und Herbewegung in Drehbewegung in einer einzigen Richtung umzuwandeln, wobei die Wandler (20) jeweils einen Linearaktor in Form eines Schraubengewindes (32) und eines Mitnehmers (36) umfassen, wobei die Wandler ein Ende aufweisen, das relativ zu einem anderen Ende verschiebbar ist, um die Wandler zu stauchen und zu verlängern, und dazu angepasst sind, während des Stauchens und Verlängerns eine Eingabe-Linearbewegung in eine Ausgabe-Drehbewegung umzuwandeln.

2. Kraftabnahmeeinheit nach Anspruch 1, wobei das Paar Wandler (20) parallel angeordnet sind.

3. Kraftabnahmeeinheit nach einem der vorangehenden Ansprüche, wobei die Wandler (20) jeweils eine Kopplung (38) umfassen, die wirksam ist, um die Eingabe-Linearbewegung während Linearbewegung in nur einer Richtung in die Ausgabe-Drehbewegung umzusetzen.

4. Kraftabnahmeeinheit nach Anspruch 3, wobei die Kopplung eine unidirektionale Kupplung (38) umfasst.

5. Kraftabnahmeeinheit nach einem der vorangehenden Ansprüche, wobei das Paar Wandler (20) derart gekoppelt ist, dass der Drehbewegungsausgabe eines Wandlers die gleichzeitige Drehbewegung des anderen Wandlers bewirkt.

6. Kraftabnahmeeinheit nach einem der vorangehenden Ansprüche, wobei das Paar Wandler (20) einen ersten und einen zweiten Wandler umfasst, wobei der erste Wandler dazu angeordnet ist, Linearbewegung in einer ersten Richtung in die Drehbewegung umzusetzen, und der zweite Wandler dazu angeordnet ist, Linearbewegung in einer der ersten Richtung entgegengesetzten zweiten Richtung in die Drehbewegung umzusetzen.

7. Kraftabnahmeeinheit nach einem der vorangehenden Ansprühe, wobei die Wandler jeweils ein drehbares Ausgabeelement (34) umfassen, durch das die Drehbewegung ausgegeben wird.

8. Kraftabnahmeeinheit nach Anspruch 7, wobei das Paar Ausgabeelemente (34) derart aneinander gekoppelt sind, dass die Drehung eines Ausgabeelements in einer ersten Richtung die Drehung des anderen Ausgabeelements in einer entgegengesetzten zweiten Richtung bewirkt.

9. Vorrichtung (10; 110) zum Nutzbarmachen von Wellenenergie, umfassend ein Schwimmelement (12; 112); eine Basis (14), um die das Schwimmelement zur linearen Hin-und Herbewegung gefesselt ist; und mindestens eine Kraftabnahmeeinheit nach einem der Ansprüche 1 bis 8.

10. Vorrichtung (10; 110) zum Nutzbarmachen von Wellenenergie nach Anspruch 9, wobei die Basis (14) ein Ankerelement (16) und mindestens ein Verbindungselement (18; 118), das sich von dem Ankerelement zu dem Schwimmelement erstreckt, umfasst.

11. Vorrichtung (10; 110) zum Nutzbarmachen von Wellenenergie nach Anspruch 10, wobei das mindestens eine Verbindungselement (18; 118) gleitfähig mit dem Schwimmelement (12; 112) gekoppelt ist.

12. Vorrichtung (10; 110) zum Nutzbarmachen von Wellenenergie nach einem der Ansprüche 9 bis 11, umfassend eine Vielzahl der Kraftabnahmeeinheiten, die dazu angeordnet sind, Kraft einzeln oder in Kombination aus mehr als einem Freiheitsgrad der Wellenbewegung zu gewinnen.

13. Vorrichtung (110) zum Nutzbarmachen von Wellenenergie nach einem der Ansprüche 9 bis 12, wobei die Basis (14) eine Vielzahl von Verbindungsgliedern (118) umfasst, die auf eine Weise zwischen dem Schwimmelement und dem Ankerelement gekoppelt sind, die es dem Schwimmelement ermöglicht, sich in einer Vielzahl von Freiheitsgraden in Bezug auf das Ankerelement zu bewegen.

## Revendications

1. Unité de prise de force utilisant l'énergie des vagues adaptée pour convertir un mouvement linéaire réciproque en un mouvement rotatif, l'unité de prise de force comprenant une paire de transducteurs couplés (20) adaptés ensemble pour convertir les deux sens du mouvement linéaire réciproque en un mouvement rotatif dans un même sens, chaque transducteur (20) comprenant un actionneur linéaire sous forme de filet de vis (32) et d'un suiveur (36), les transducteurs ayant une extrémité déplaçable par rapport à une autre extrémité pour comprimer et étendre les transducteurs et étant adaptés pour convertir un mouvement d'entrée linéaire en un mouvement de sortie rotatif durant la compression et l'extension.

2. Unité de prise de force selon la revendication 1 dans laquelle les transducteurs de la paire de transducteurs (20) sont disposés en parallèle.

3. Unité de prise de force selon l'une quelconque des revendications précédentes dans laquelle chaque transducteur (20) comprend un couplage (38) exploitable pour traduire le mouvement d'entrée linéaire en le mouvement de sortie rotatif durant un mouvement linéaire dans un seul sens.

4. Unité de prise de force selon la revendication 3 dans laquelle le couplage comprend un embrayage unidirectionnel (38).

5. Unité de prise de force selon l'une quelconque des revendications précédentes dans laquelle la paire de transducteurs (20) est couplée de telle sorte que la sortie de mouvement rotatif d'un transducteur engendre un mouvement rotatif simultané de l'autre transducteur.

6. Unité de prise de force selon l'une quelconque des revendications précédentes dans laquelle la paire de transducteurs (20) comprend un premier transducteur et un second transducteur, le premier transducteur étant agencé pour traduire un mouvement linéaire dans un premier sens en le mouvement rotatif, et le second transducteur étant agencé pour traduire le mouvement linéaire dans un second sens, opposé au premier sens, en le mouvement rotatif.

7. Unité de prise de force selon l'une quelconque des revendications précédentes dans laquelle chaque transducteur comprend un élément de sortie rotatif (34) à partir duquel est produit le mouvement rotatif.

8. Unité de prise de force selon la revendication 7 dans laquelle les éléments de sortie de la paire d'éléments de sortie (34) sont couplés l'un à l'autre de telle sorte que la rotation d'un élément de sortie dans un premier sens engendre une rotation de l'autre élément de sortie dans un second sens opposé.

9. Dispositif de récupération de l'énergie des vagues (10 ; 110) comprenant un élément flottant (12 ; 112) ; une base (14) autour de laquelle l'élément flottant est contraint à un mouvement linéaire réciproque ; et au moins une unité de prise de force selon l'une quelconque des revendications 1 à 8.

10. Dispositif de récupération de l'énergie des vagues (10 ; 110) selon la revendication 9 dans lequel la base (14) comprend un élément d'ancrage (16) et au moins un élément de raccordement (18 ; 118) qui s'étend depuis l'élément d'ancrage jusqu'à l'élément flottant.

11. Dispositif de récupération de l'énergie des vagues (10 ; 110) selon la revendication 10 dans lequel l'au moins un élément de raccordement (18 ; 118) est couplé de manière coulissante à l'élément flottant (12 ; 112).

12. Dispositif de récupération de l'énergie des vagues (10 ; 110) selon l'une quelconque des revendications 9 à 11 comprenant une pluralité des unités de prise de force agencées pour extraire de la puissance individuellement ou en combinaison à partir de plus d'un degré de liberté de mouvement des vagues.

13. Dispositif de récupération de l'énergie des vagues (110) selon l'une quelconque des revendications 9 à 12 dans lequel la base (14) comprend une pluralité d'éléments de raccordement (118) couplée entre l'élément flottant et l'élément d'ancrage d'une manière qui permet à l'élément flottant de se déplacer dans une pluralité de degrés de liberté par rapport à l'élément d'ancrage.
